**Europäisches Patentamt**

**European Patent Office**

**Office européen des brevets**

(11) Veröffentlichungsnummer: **0 131 695**
**A1**

(12) **EUROPÄISCHE PATENTANMELDUNG**

(21) Anmeldenummer: **84104144.5**

(22) Anmeldetag: **12.04.84**

(51) Int. Cl.⁴: **H 05 B 39/04**

(30) Priorität: **16.07.83 DE 3325742**

(43) Veröffentlichungstag der Anmeldung:
**23.01.85 Patentblatt 85/4**

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Wallrafen, Werner**
**Birnheck 11**
**D-6233 Kelkheim-Ruppertshain(DE)**

(74) Vertreter: **Könekamp, Herbert, Dipl.-Ing.**
**Sodener Strasse 9**
**D-6231 Schwalbach(DE)**

(54) Elektrische Schaltungsanordnung zur Steuerung eines Gleichstroms, insbesondere für eine Helligkeits-veränderbare Armaturenbeleuchtung von Fahrzeugen.

(57) In einer elektrischen Schaltungsanordnung zur Steuerung eines Gleichstroms insbesondere für eine Helligkeits-veränderbare Armaturenbeleuchtung von Fahrzeugen sind ein Frequenzgenerator, Mittel zur Einstellung des Tastverhältnisses eines von dem Frequenzgenerator abgeleiteten Pulses sowie Leistungsschaltmittel in einem Lampenstromkreis vorgesehen. Die Leistungsschaltmittel sind durch einen Rechtecksteuerpuls mit dem eingestellten Tastverhältnis steuerbar. Um das Tastverhältnis von 0 bis 100% bei einer linearen Abhängigkeit des Tastverhältnisses von der Variation eines Einstellwiderstands zu erreichen, ist als Frequenz-generator ein freilaufender Dreieck- (oder Sägezahn-) Generator (1) vorgesehen. Zur Bildung des Rechtecksteuerpulses dient ein begrenzender Komparator (3), dessen einer Eingang (Leitung 2) mit dem Dreieck- (Sägezahn-) Puls gespeist wird, dessen anderer Eingang (Leitung 4) mit einer einstellbaren Vergleichsspannung beaufschlagt wird. Der Variations-bereich der Vergleichsspannung ist größer als der Hub des Dreieck- (Sägezahn-) Pulses, so daß bei einer Einstellung des Einstellwiderstands die Vergleichsspannung den Höchstwert des Dreieck- (Sägezahn-) Pulses überschreitet und bei einer anderen Einstellung den Kleinstwert des Dreieck- (Sägezahn-) Pulses unterschreitet.

FIG. 1

VDO Adolf Schindling AG   - 1 -       6000 Frankfurt/Main
                                      Gräfstraße 103

                                      G-R Sch-kl / E 1962
                                      14. Juli 1983

Elektrische Schaltungsanordnung zur Steuerung eines
Gleichstroms, insbesondere für eine Helligkeits-veränderbare Armaturenbeleuchtung von Fahrzeugen

Die Erfindung betrifft eine elektrische Schaltungsanordnung
zur Steuerung eines Gleichstroms, insbesondere für eine
Helligkeits-veränderbare Armaturenbeleuchtung von Fahrzeugen
nach dem Oberbegriff des Anspruchs 1.

Derartige bekannte Schaltungsanordnungen sind vorgesehen, um
die Helligkeit von Beleuchtungseinrichtungen  insbesondere
Armaturenbeleuchtungen einzustellen, und zwar ohne in dem
Lampenstromkreis eingeschalteten Stellwiderstand. Solche
Stellwiderstande verursachen eine hohe Verlustleistung, so
daß der von Fahrzeugbatterien oder Schiffsbatterien entnommene
Strom zur Beleuchtung schlecht genutzt wird. Die durch die
Verlustleistung entstehende Wärme ist darüber hinaus unerwünscht, da sie eine kompakte Bauweise der Steuerungseinrichtung begrenzt und/oder die Arbeitsweise von elektronischen
Bauelementen beeinträchtigen sowie deren Lebensdauer begrenzen kann.

Die bekannten Schaltungsanordnungen der eingangs genannten
Gattung haben zum Ziel, diese Verlustleistung herabzusetzen,
indem der Lampenstromkreis mit einem Puls einstellbarer Pulsdauer oder einstellbarem Tastverhältnisses gespeist wird.
Die Verlustleistung kann dann im wesentlichen nur kurzzeitig beim Auftreten der Impulsflanken entstehen und dadurch gering gehalten werden.

Eine derartige bekannte Schaltungsanordnung umfaßt als Frequenzgenerator einen astabilen Multivibrator, der im wesentlichen einen Rechteckpuls erzeugt. Das Tastverhältnis oder Schaltverhältnis dieses Rechteckpulses ist durch einen Stellwiderstand variierbar, der in Verbindung mit einem Kondensator an einem Steueranschluß eines integrierten Schaltkreises angeschlossen ist. Von einem Ausgang des integrierten Schaltkreises wird somit ein Rechteckpuls mit einstellbarem Tastverhältnis über einen Treiber-Transistor zu Leistungstransistoren, vorzugsweise in Darlington-Schaltung, geführt.

Die Leistungstransitoren stellen den Mittelwert des Gleichstroms der Betriebsspannung ein, mit dem die Lampen in dem Lampenstromkreis beaufschlagt werden. Der Mittelwert des Stroms und somit die Helligkeit der Lampen stehen in unmittelbarem Zusammenhang mit dem Tastverhältnis des Rechteckpulses, der die Leistungstransistoren steuert. - Nachteilig bei dieser Schaltungsanordnung ist, daß durch die Beeinflussung des integrierten Schaltkreises mit dem einstellbaren Widerstand zur Steuerung des Tastverhältnisses auch die Pulsfrequenz beeinflußt wird, mit der der astabile Multivibrator schwingt. Dabei ist zu berücksichtigen, daß bei zu niedriger Pulsfrequenz die durch die Leistungstransistoren geschalteten Lampen einen flimmernden Eindruck erzeugen, der die Ablesung von Instrumenten beeinträchtigen kann. Außerdem wird dabei die Lebensdauer herabgesetzt. Andererseits hat eine zu hohe Pulsfrequenz eine Verschlechterung des Wirkungsgrades der Leistungstransistoren zur Folge, da entsprechend der Pulsfrequenz häufig umgeschaltet wird. Deswegen ist die Steuerbarkeit des astabilen Multivibrators begrenzt, und der Mittelwert des Stroms, mit dem die Lampen beaufschlagt werden, kann nicht ohne weiteres von 0 bis zu einem Dauerstrom eingestellt werden. Darüber hinaus besteht ein nichtlinearer Zusammenhang zwischen der Variation des einstellbaren Widerstands und dem Tastverhältnis, wodurch die Einstellung der gewünschten Helligkeit weiter erschwert wird (DE-OS 27 28 796).

Im wesentlichen die gleichen Nachteile hat eine andere zum Stand der Technik gehörende Schaltungsanordnung der eingangs genannten Gattung: Hier ist als Frequenzgenerator ein Schmitt-Trigger mit einer Widerstandskondensator-Kombination vorgesehen. Mit einem im Generatorkreis liegenden Widerstand wird ein bestimmtes Tastverhältnis erzielt. Zur Änderung des Tastverhältnisses des von diesem Frequenzgenerator abgeleiteten Pulses ist dem Frequenzgenerator eine Differenzierstufe nachgeschaltet. Die Differenzierstufe weist eine differenzierende Widerstandskondensator-Kombination mit einem Potentiometer auf. Die Form der Differenzierung ist in erheblichem Maß von der Stellung des Potentiometers abhängig. Ein der Differenzierstufe nachgeschalteter Schmitt-Trigger formt das differenzierte Signal um und speist über einen Treiber-Transistor einen Leistungstransistor in dem Lampenstromkreis. Eine unerwünschte Beeinflussung der Helligkeit der Lampen durch Spannungsschwankungen der Betriebsspannung wird durch eine Spannungsstabilisierung vermieden, die durch einen Widerstand und eine Zener-Diode der Betriebsspannungsleitung zu dem Frequenzgenerator und der Differenzierstufe vorgesehen ist. In der Betriebsspannungsleitung zu dem Frequenzgenerator der Differenzierstufe werden ferner Störspannungen mit hoher Frequenz durch einen Kondensator unterdrückt (DE-OS 30 14 193). - Bei dieser Schaltungsanordnung besteht ebenfalls kein linearer Zusammenhang zwischen der Einstellung des Potentiometers in der Differenzierstufe und dem Tastverhältnis des von der Differenzierstufe abgeleiteten Pulses.

Die Einstellbarkeit des Tastverhältnisses ist von beispielsweise 5 % auf einen Wert, der nur in der Nähe von 100 % liegt, begrenzt.

Der vorliegenden Erfindung liegt daher die Aufgabe zugrunde, eine Schaltungsanordnung der eingangs genannten Gattung so auszubilden, daß das Tastverhältnis des von dem Frequenzgenerator abgeleiteten Pulses von 0 auf einen Höchstwert in linearer Abhängigkeit von der Einstellung eines einstellbaren Widerstands oder Potentiometers erzielt wird. Eine Frequenzänderung des Pulses soll dabei nicht auftreten. Die Schaltungsanordnung soll sich durch einen möglichst geringen Aufwand auszeichnen und insbesondere ohne einstellbare Widerstände oder Potentiometer mit nichtlinearer Kennlinie trotz des linearen Zusammenhangs mit dem Tastverhältnis ausführbar sein.

Diese Aufgabe wird durch die in dem kennzeichnenden Teil des Anspruchs 1 angegebene Erfindung gelöst.

Das Prinzip der Erfindung ist, daß ein Dreieck- oder Sägezahnpuls erzeugt wird und mit einer einstellbaren Gleichspannung als Vergleichsspannung verglichen wird. Der Vergleich erfolgt in einem begrenzendem Komparator, der einen Rechteckpuls abgibt, dessen Einschaltdauer von der Zeit direkt abhängt, während der der Dreieckpuls oder Sägezahnpuls die Vergleichsspannung überschreitet (oder umgekehrt). Da der Variationsbereich der Gleichspannung so gewählt wird, daß das höchste Potential des Dreieckpulses überschritten werden kann und das niedrigste Potential des Dreieckpulses unterschritten werden kann, läßt sich so ein Rechteckpuls mit einem von 0 bis 100 % einstellbarem Tastverhältnis bilden. Die Vergleichsspannung kann dabei durch einen linearen Einstellwiderstand durch Teilung der Betriebsspannung erzeugt werden.

Die Frequenz des Dreieck- oder Sägezahnpulses bestimmt auch die Frequenz des Rechteckpulses einstellbaren Tastverhältnisses, mit dem die Leistungsschaltmittel, insbesondere Leistungstransistoren gesteuert werden. Diese Frequenz ist unabhängig von dem Tastverhältnis. Wegen dieser fehlenden zwangsläufigen Beeinflussung ist die Frequenz, mit der der Dreieck- oder Sägezahngenerator schwingt, unkritisch. Der Dreieck- oder Sägezahngenerator kann daher als freilaufender Generator ausgebildet sein.

Eine derartige besonders bevorzugte Ausbildung des Dreieck-Generators ergibt sich aus Anspruch 2.

In Anspruch 3 ist angegeben, wie die Schaltungsanordnung besonders zweckmäßig zum Schutz des Leistungstransistors mit einer Kurzschlußsicherung weiterzubilden ist. - Die Kurzschlußsicherung ist dabei nicht wie sonst üblich zur Stromüberwachung in dem Lastkreis oder Lampenstromkreis durch Spannungsabfall an einem ohmschen Widerstand ausgebildet, sondern es wird die Wirkung ausgenutzt, daß im Kurzschlußfall die Sättigungsspannung des Leistungstransistors während dessen Ansteuerung (Öffnen) einen Grenzwert überschreitet. Die Sättigungsspannung steigt dabei stärker an als ein Spannungsabfall an einem ohmschen Widerstand im Lampenstromkreis, so daß diese Stromüberwachung besonders wirkungsvoll ist. Übersteigt die Sättigungsspannung des Leistungstransistors den Grenzwert, so wird der Transistor mittels weiterer Schaltelemente gesperrt, so daß er nicht durch den Kurzschlußstrom zerstört werden kann.

Eine besonders zweckmäßige Ausbildung der Schaltungsanordnung zur Kurzschlußsicherung ist in Anspruch 4 angegeben. - Bei dieser Schaltungsanordnung erfolgt ein Vergleich der Kollektor-Emitter-Spannung des Leistungstransistors mit der Kollektor-Emitter-Spannung des ihn steuernden Treiber-Transistors. Damit wird erreicht, daß - solange kein Kurzschlußfall erreicht ist - das an dem Differenzverstärker liegende (negative) Potential des Treiber-Transistors größer als das positive Potential des Leistungstransistors ist und zwar sowohl im leitenden als auch gesperrten Zustand des Leistungstransistors. Erst im Kurzschlußfall ist diese Bedingung bei leitendem Leistungstransistor nicht mehr erfüllt, so daß das Ausgangssignal des Differenzverstärkers den Leistungstransistor über einen zweiten Treiber-Transistor sperren kann.

Durch die in Anspruch 5 angegebene Anlaufschaltung wird beim Einschalten der Lampen zusammen mit der gesamten Schaltungsanordnung verhindert, daß ein tatsächlich nicht vorliegender Kurzschlußfall erfaßt wird und den Leistungstransistor sperrt, solange die Lampen noch den verhältnismäßig niedrigen Kaltwiderstand haben. Während dieser Zeit wird also die Schaltungsanordnung zum Sperren des Leistungstransistors im Kurzschlußfall deaktiviert. Erst nach einer Zeit, in der die Lampen einen höheren Widerstand angenommen haben, wird die Anlaufschaltung wirkungslos, so daß die Schaltungsanordnung zur Überwachung des Leistungstransistors im Kurzschlußfall eingreifen kann.

Eine besonders geeignete, wenig aufwendige Anlaufschaltung ist in Anspruch 6 angegeben. In ihr erzeugt ein Kondensator nach dem Einschalten der Schaltungsanordnung einen Impuls, der mittels eines weiteren Transistors das Ausgangssignal des Differenzverstärkers, welches einen Kurzschlußfall simuliert, wirkungslos macht.

Die Erfindung wird im folgenden anhand einer Zeichnung mit 2 Figuren beschrieben. Es zeigen:

Fig. 1    ein vereinfachtes Blockschaltbild der Schaltungsanordnung zur Einstellung der Helligkeit mit Kurzschlußsicherung und Anlaufschaltung und

Fig. 2    ein detaillierteres Schaltbild der Schaltung nach
Fig. 1.

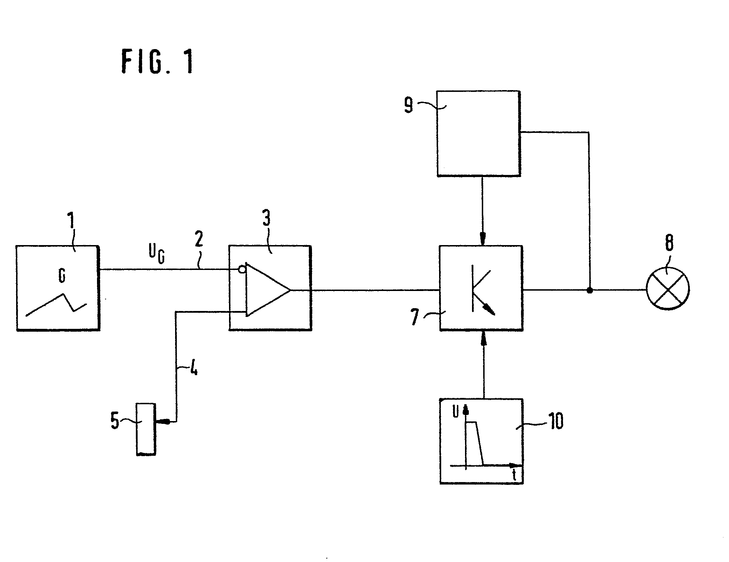

In dem Blockschaltbild in Fig. 1 ist mit 1 ein Sägezahngenerator bezeichnet, der einen Sägezahnpuls mit einer
Frequenz von etwa 100 Hz erzeugt. Der Sägezahnpuls wird
über eine Leitung 2 in einen Komparator 3 eingespeist, der
im wesentlichen aus einem Differenzverstärker besteht. Der
Komparator 3 erhält andererseits ein Vergleichsspannungssignal über eine Leitung 4, welches von einem Einstellwiderstand 5 abgegeben wird.

Da der Komparator begrenzend wirkt, erzeugt er in seinem
Ausgang 6 einen Rechteckimpuls. Das Tastverhältnis dieses
Pulses hängt von der Zeitdauer ab, während der der Dreieckpuls der Leitung 2 die Vergleichsspannung auf der Leitung 4
unterschreitet bzw. überschreitet. So kann der Komparator
einen Rechteckpuls mit dem Tastverhältnis 1, also praktisch
eine Gleichsspannung, abgeben, wenn die Vergleichsspannung
auf der Leitung 4 ständig größer als der Größtwert des
Dreieckpulses ist oder einen Rechteckpuls mit dem Tastverhältnis 0, wenn die Vergleichsspannung auf einen Wert kleiner
dem kleinsten Potential des Dreieckpulses eingestellt ist.

Der Rechteckpuls von der Leitung 6 steuert eine Endstufe 7,
die mit einem Leistungstransistor realisiert ist. Eine an
die Endstufe mit einem Lampenstromkreis angeschlossene Lampe 8
wird demgemäß mit einem Rechteck-Spannungspuls  beaufschlagt,
dessen Form dem Rechteckpuls an dem Ausgang 6 des Komparators
3 entspricht.

0131695

In dem Blockschaltbild in Fig. 1 ist weiterhin angedeutet, daß mit einer Kurzschlußsicherung 9 ein in dem Lampenstromkreis auftretender Kurzschlußfall erfaßt wird. Die mit elektronischen Bauelementen aufgebaute Kurzschlußsicherung wirkt ebenfalls steuernd auf die Endstufe 7 in dem Sinne ein, daß die Endstufe gesperrt wird, wenn ein Kurzschlußfall vorliegt.

Eine Anlaufschaltung 10, die ebenfalls mit der Endstufe 7 verbunden dargestellt ist, sorgt dafür, daß die Kurzschlußsicherung nicht kurz nach dem Einschalten der gesamten Schaltungsanordnung mit der Lampe 8 auf die Endstufe einwirken kann, da in diesem Falle der Kaltwiderstand der Lampe einen Kurzschlußfall simuliert.

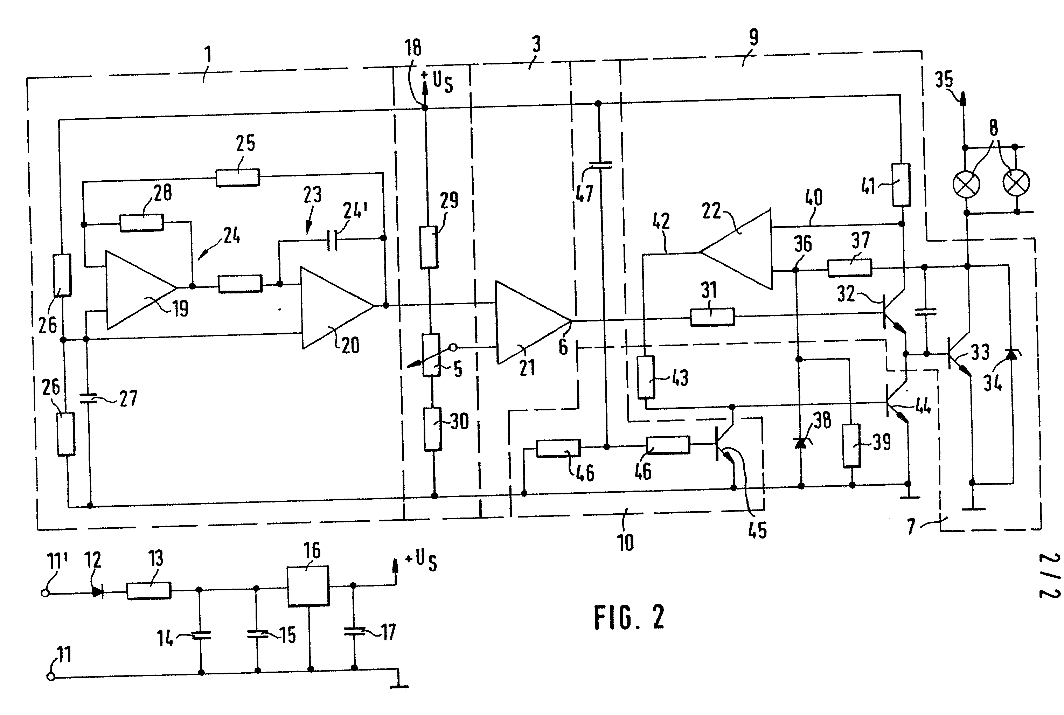

In der nachfolgend zu besprechenden Fig. 2 sind gleiche Baugruppen bzw. Teile wie in Fig.1 mit den gleichen Bezugszeichen versehen.

In Fig. 2 ist in dem linken unteren Teil die Schaltungsanordnung zur Stabilisierung und Regelung der Stromversorgung dargestellt. Klemmen 10 und 11 werden mit der unstabilisierten Betriebsspannung, einer Batteriespannung von 12 oder 24 Volt beaufschlagt. Eine Diode 12 verhindert eine Stromrichtungsumkehr. Ein Widerstand 13 sowie Kondensatoren 14, 15 sind zur Glättung vorgesehen. Mit einem integrierten Schaltkreis 16 wird eine Spannungsstabilisierung erzielt, so daß die Steuerung der Lampenhelligkeit nicht von Betriebsspannungen abhängt. Der Ausgang des integrierten Schaltkreises ist mit einem weiteren Kondensator 17 überbrückt. Die damit stabilisierte und geglättete Betriebsspannung wird an dem Anschluß 18 in dem oberen Schaltungsteil mit einem zweiten integrierten Schaltkreis eingespeist.

Der zweite integrierte Schaltkreis umfaßt einen Operationsverstärker 19, einen Operationsverstärker 20, einen Komparator (Operationsverstärker) 21 sowie einen Differenzverstärker
(Operationsverstärker) 22.

In dem oberen Schaltungsteil ist innerhalb des mit der unterbrochenen Linie abgeteilten Feldes der Dreieckgenerator 1
mit einem Integrator 23 gebildet, der im wesentlichen aus dem
mit einem Kondensator 24 rückgekoppelten Operationsverstärker 20 sowie dem Komparator 24 besteht, mit dem der
Integrator über einen Gegenkopplungswiderstand 25 gegengekoppelt
ist. Ein Spannungsteiler 26 mit einem Glättungskondensator 27
erzeugt eine geteilte stabilisierte Betriebsspannung, die
in jeweils einen Eingang der Operationsverstärker 19 und 20
eingespeist wird.

Der Dreieckgenerator 1 erzeugt einen Dreieckpuls mit einer
Pulsfrequenz, die von der Dimensionierung seiner frequenzbestimmenden Schaltelemente, nicht aber von einem äußeren
Taktgeber abhängt und mit einem Hub, der durch das Verhältnis
des Werts des Gegenkopplungswiderstandes 25 zu einem Wert eines
Mitkopplungswiderstands 28 abhängt, der den Ausgang des
Operationsverstärkers 19 mit seinem einen Eingang verbindet.

Ein Eingang des Operationsverstärkers 21 des Komparators 3
wird mit dem Dreieckpuls beaufschlagt. Ein zweiter Eingang
des Operationsverstärkers des Komparators liegt an einer
Vergleichsspannung, die mittels des Einstellwiderstands und
zweier Teilerwiderstände 29, 30 erzielt wird.

An einem Ausgang 6 des Komperators 3 besteht somit ein Rechteckimpuls mit einem Tastverhältnis, welches von der Einstellung des Einstellwiderstands 5 in einer linearen Beziehung abhängt. Es handelt sich um einen Rechteckpuls, da der
Operationsverstärker 21 des Komparators begrenzend wirkt.

Der Ausgang des Komparators 3 steht über einen Koppelwiderstand 31 mit der Basis eines npn-Transistors 32 in Verbindung, der als Treiber-Transistor wirkt. Der Treiber-Transistor wiederum steuert einen Leistungstransistor 33 an. Lampen 8 befinden sich in dem Lampenstromkreis bzw. in dem Kollektorkreis des Leistungstransistors 33. Die Kollektor-Emitter-Strecke des Leistungstransistors ist durch eine Zener-Diode 34 zum Schutz gegen Überspannungen überbrückt.

Die bisherige besprochene Schaltungsanordnung wirkt in der Weise, daß die Lampen mit einem Rechteckpuls einer Spannung beaufschlagt werden, die an einem Anschluß 35 anliegt. Die Frequenz dieses Spannungs -Rechteckpulses ist gleich der Frequenz des Dreieckpulses des Sägezahngenerators, und das Tastverhältnis des Leistungs-Rechteckpulses ist gleich dem Tastverhältnis des steuernden Rechteckpulses, der an dem Ausgang 6 des Komparators 3 anliegt.

Zur Kurzschlußsicherung steht ein Eingang 36 des Differenzverstärkers 22 über einen Spannungsteiler mit den Widerständen 37 und 38 mit dem Kollektor des Leistungstransistors 33 in Verbindung. An dem Eingang 36 ist weiterhin eine Z-Diode 38 zur Spannungsbegrenzung angeschlossen. Ein zweiter Eingang 40 des Differenzverstärkers 22 steht mit dem Kollektor des Treiber-Transistors 32 in Verbindung, der wiederum über einen Kollektorwiderstand 41 mit der stabilisierten Betriebsspannung beaufschlagt wird.

Ein Ausgang 42 des Differenzverstärkers22 ist über einen Vorwiderstand 43 zu einer Basis eines Transistors 44 geführt, dessen Kollektor-Emitter-Strecke in Reihe zu der Kollektor-Emitter-Strecke des Treiber-Transistors 32 liegt. Die gemeinsame Verbindung des Kollektors des Transistors 44 mit dem Emitter des Treiber-Transistors 32 ist an die Basis des Leistungstransistors 33 angeschlossen.

Diese Schaltungsanordnung dient zur Kurzschlußsicherung, indem die Sättigungsspannung zwischen Kollektor und Emitter an dem Leistungstransistor 33 erfaßt und mit der entsprechenden Spannung des Treiber-Transistors 32 verglichen wird. Liegt kein Kurzschluß vor, so ist die Kollektor-Emitter-Spannung des Leistungstransistors verhältnismäßig niedrig, wenn der Leistungstransistor öffnet, während bei einem Kurzschluß diese Spannung bei geöffnetem Leistungstransistor in starkem Maße ansteigt. Durch den Differenzverstärker 22 wird ein Vergleich zwischen einem Teil der Kollektor-Emitter-Spannung des Transistors 33 mit der entsprechenden Spannung des Treiber-Transistors 32 durchgeführt.

Demgemäß bildet der Differenzverstärker nur im Kurzschlußfall ein Ausgangssignal an seinem Ausgang 42, welches den Transistor 44 in die Sättigung treibt und damit den Leistungstransistor sperrt.

Um zu verhindern, daß beim Einschalten der Lampen 8 und der gesamten Schaltungsanordnung ein Kurzschluß infolge des Kaltwiderstands der Lampen erfaßt wird, der tatsächlich nicht vorliegt, ist eine Anlaufschaltung 10 vorgesehen. Die Anlaufschaltung umfaßt im wesentlichen einen Transistor 45, dessen Basis über einen Teilerwiderstand 46 durch einen Kondensator 47 angesteuert wird, der mit der stabilisierten Betriebsspannung beaufschlagt wird und den Einschaltstoß erfaßt. In diesem Falle wird der Transistor 45 durch den Kondensator 47 kurzzeitig leitend gesteuert, wodurch das einen Kurzschluß signalisierende Signal des Differenzverstärkers 22 hinter dem Vorwiderstand 43 kurzgeschlossen wird und so den normalen Betrieb der Endstufe nicht beeinflussen kann. Nach Abklingen des Einschaltstromstoßes über den Kondensator 47 ist die Schaltungsanordnung 9 zur Kurzschlußsicherung aktiviert.

0131695

VDO-Adolf Schindling AG                    Gräfstraße 103
                                           6000 Frankfurt/Main
                                           G-R Sch-kl / E 1962
                                           14. Juli 1983

Patentansprüche

1. Elektrische Schaltungsanordnung zur Steuerung eines
   Gleichstroms, insbesondere für eine helligkeitsveränderbare Armaturenbeleuchtung von Fahrzeugen, mit einem
   Frequenzgenerator, mit Mitteln zur Einstellung des Tastverhältnisses eines von dem Frequenzgenerator abgeleiteten
   Pulses sowie mit Leistungsschaltmitteln in einem Lampenstromkreis, die durch einen Rechtecksteuerpuls mit dem
   eingestellten Tastverhältnis steuerbar sind,
   d a d u r c h   g e k e n n z e i c h n e t ,
   daß als Frequenzgenerator ein freilaufender Dreieck-
   (oder Sägezahn-) Generator (1) vorgesehen ist und daß
   zur Bildung des Rechtecksteuerpulses ein begrenzender
   Komparator (3) verwendet wird, dessen einer Eingang
   (Leitung 2) mit dem Dreieck- (Sägezahn-) Puls gespeist
   wird und dessen anderer Eingang (Leitung 4) mit einer
   einstellbaren Vergleichsspannung, deren Variationsbereich größer als der Hub des Dreieck- (Sägezahn-) Pulses
   ist, beaufschlagt wird.

2. Schaltungsanordnung nach Anspruch 1,
   d a d u r c h   g e k e n n z e i c h n e t ,
   daß der Dreieckgenerator (1) einen Integrator (23) aufweist, der mit einem nichtinvertierenden Komparator (24)
   mit Hysterese mitgekoppelt ist, und daß der Hub des
   Dreieck- (Sägezahn-) Pulses durch das Verhältnis der
   Widerstandswerte eines Gegenkopplungswiderstandes (25)
   zwischen dem Ausgang des Integrators sowie einem Eingang
   des Komparators sowie eines Mitkopplungswiderstandes (28)
   des Komparators eingestellt ist.

3. Schaltungsanordnung mit einem Leistungs-Transistor als Leistungsschaltmittel und gegebenenfalls mit einem vorgeschalteten Treiber-Transistor nach Anspruch 1 oder 2, d a d u r c h   g e k e n n z e i c h n e t , daß zur Kurzschlußsicherung in dem Lampenstromkreis (Lampen 8) die Sättigungsspannung (Kollektor-Emitterspannung) des Leistungstransistors (33) erfaßt wird und ein aus der Sättigungsspannung abgeleitetes Kurzschlußsicherungssignal so zu einem Steuereingang (Basis) des Leistungstransistors zurückgeführt wird, daß dieser im Kurzschlußfalle sperrt.

4. Schaltungsanordnung nach Anspruch 3, d a d u r c h   g e k e n n z e i c h n e t , daß ein Differenzverstärker (22) an einem ersten Steuereingang (36) mit dem Kollektor des zu überwachenden Leistungstransistors (33) in Verbindung steht und mit einem zweiten Steuereingang (40) mit dem Kollektor des Schalt -Transistors (32) verbunden ist und daß der Ausgang (42) des Differenzverstärkers über einen zweiten Treiber-Transistor (44) zu dem Steuereingang (Basis) des Leistungstransistors (33) zurückgeführt ist.

5. Schaltungsanordnung nach Anspruch 3 oder 4, g e k e n n z e i c h n e t   d u r c h eine Anlaufschaltung (10), die die Kurzschlußsicherung (9) beim Einschalten der Lampen deaktiviert.

6. Schaltungsanordnung nach Anspruch 5, d a d u r c h   g e k e n n z e i c h n e t , daß ein das Ausgangssignal des Differenzverstärkers (22) ableitender Transistor (45) über einen Kondensator (47) an seinem Steuereingang (Basis) durch die einschaltbare Betriebsspannung einen Impuls erhält, durch den der Transistor (45) kurzzeitig leitend gesteuert wird.

FIG. 1

FIG. 2

0131695

Europäisches
Patentamt

## EUROPÄISCHER RECHERCHENBERICHT

EP  84 10 4144

## EINSCHLÄGIGE DOKUMENTE

| Kategorie | Kennzeichnung des Dokuments mit Angabe, s we erforderlich, der maßgeblichen Teile | Betrifft Anspruch | KLASSIFIKATION DER ANMELDUNG (Int Cl. 3) |
|---|---|---|---|
| A | DE-A-2 736 859  (ROYAL INDUSTRIES)<br>* Seite 12 - Seite 14, Absatz 1 *<br><br>--- | 1 | H 05 B  39/04 |
| A | EP-A-0 005 311  (KELLIS)<br>* Seite 8, Zeile 8 - Seite 10, Zeile 10 *<br><br>--- | 1 | |
| A | FR-A-2 315 720  (PHILIPS)<br>* Seite 3, Zeile 24 - Seite 5 *<br><br>--- | 1 | |
| D,A | FR-A-2 357 142  (BORLETTI)<br><br>--- | | |
| D,A | DE-A-3 014 193  (MOHR)<br><br>----- | | |

| | RECHERCHIERTE SACHGEBIETE (Int. Cl 3) |
|---|---|
| | H 05 B<br>H 02 B<br>B 60 Q |

Der vorliegende Recherchenbericht wurde für alle Patentansprüche erstellt.

| Recherchenort<br>DEN HAAG | Abschlußdatum der Recherche<br>04-10-1984 | Prüfer<br>KERN H. |
|---|---|---|

EPA Form 1503 03 82